# EUROPÄISCHE PATENTSCHRIFT

(11) **EP 2 311 680 B1**
(45) Veröffentlichungstag und Bekanntmachung des Hinweises auf die Patenterteilung: **07.10.2020**
(21) Anmeldenummer: 10186961.8
(22) Anmeldetag: 08.10.2010
(51) Int. Cl.: B60K 6/40, B60K 6/48

(54) **Antriebseinheit für ein Hybridfahrzeug**
Drive unit for a hybrid vehicle
Unité d'entraînement pour un véhicule hybride

(30) Priorität: 15.10.2009 DE 102009045727
(43) Veröffentlichungstag der Anmeldung: 20.04.2011
(73) Patentinhaber: ZF Friedrichshafen AG, 88046 Friedrichshafen (DE)
(72) Erfinder: Ebert, Angelika, 97453, Schonungen (DE); Großpietsch, Wolfgang, 97422, Schweinfurt (DE); Reiser, Robert, 78359, Nenzingen (DE); Bertels, Heinz, 88709, Meersburg (DE); Ratte, Andreas, 97456, Dittelbrunn (DE); Markow, Alexander, 97424, Schweinfurt (DE)
(74) Vertreter: ZF Friedrichshafen AG

(56) Entgegenhaltungen:
- EP-A1- 1 736 345
- WO-A2-2008/092426
- DE-A1- 10 005 996
- DE-A1- 19 934 936
- DE-A1-102007 043 737
- FR-A1- 2 791 009

## Beschreibung

Die Erfindung betrifft eine Antriebseinheit für ein wahlweise verbrennungs- und/oder elektromotorisch antreibbares Hybridfahrzeug gemäß dem Oberbegriff von Patentanspruch 1. Eine derartige Antriebseinheit wird beispielsweise in der EP 1 736 345 A1 beschrieben.

Der vorliegenden Erfindung liegt das Problem zugrunde, eine kostengünstige, leicht zu montierende und zugleich kompakte Antriebseinheit zu schaffen, welche zugleich in der Lage ist, in Abhängigkeit vom jeweiligen Betriebszustand in einem Fahrzeugantriebsstrang auftretende Drehungleichförmigkeiten wirksam zu dämpfen.

Die vorstehend genannten Aufgaben werden bei einer gattungsgemäßen Antriebseinheit durch die im Kennzeichen von Patentanspruch 1 genannten Merkmale gelöst.

Es wird somit eine Antriebseinheit bereitgestellt, welche einen Verbrennungsmotor mit einer Abtriebswelle, ein Getriebe mit einer Eingangswelle und eine zwischen dem Verbrennungsmotor und dem Getriebe angeordnete elektrische Maschine mit einem Stator und mit einem Rotor umfasst, der zumindest mittelbar mit der Abtriebswelle des Verbrennungsmotors und mit der Getriebeeingangswelle zur Übertragung eines Drehmoments koppelbar ist. Zur besseren Entkopplung gegenüber im Antriebsstrang des Hybridfahrzeuges auftretenden Drehungleichförmigkeiten wird vorgeschlagen, die Antriebseinheit mit einem ersten und einem zweiten Torsionsdämpfer auszubilden, wobei zumindest der Rotor der elektrischen Maschine innerhalb eines zwischen den Torsionsdämpfern ausgebildeten Drehmomentübertragungswegs angeordnet ist. Die Antriebseinheit kann weiter eine im Drehmomentübertragungsweg zwischen dem Verbrennungsmotor und dem Getriebe angeordnete schaltbare Kupplung umfassen, jedoch kann diese auch außerhalb dieses Drehmomentübertragungsweges, also z.B. zwischen dem Verbrennungsmotor und dem ersten Torsionsdämpfer oder innerhalb des Gangwechselgetriebes angeordnet sein.

Dadurch, dass zur Dämpfung der in einem Hybridfahrzeug auftretenden Torsionsschwingungen zwei in Reihe im Drehmomentübertragungsweg geschaltete einzelne Torsionsdämpfer eingesetzt werden, zwischen denen zumindest die Massenträgheit des Rotors der elektrischen Maschine wirksam wird, kann bei bestimmten Betriebszuständen insbesondere bei verbrennungsmotorischen Betrieb als auch bei elektromotorischen Betrieb oder einer gemischten Betriebsweise eine gegenüber dem Stand der Technik bessere Entkopplung gegenüber den Fahrkomfort beeinträchtigenden Antriebsstrangschwingungen erreicht werden. Bei dem verbrennungsmotorseitig angeordneten Torsionsdämpfer kann durch die sekundärseitige Verbindung mit dem Rotor der Elektromaschine und gegebenenfalls der Kupplung im Wesentlichen auf eine unmittelbare Masseanhäufung verzichtet werden. Der der Elektromaschine und gegebenenfalls der Kupplung im Drehmomentverlauf nachgelagerte Torsionsdämpfer kann daher auch entsprechend kompakt ausgeführt werden. Durch eine spezifische Ausgestaltung der einzelnen Torsionsdämpfer lässt sich das zu bedämpfende Frequenzspektrum insgesamt breitbandiger und effektiver abdecken. Die vorgeschlagene Antriebseinheit kann somit wesentlich zur Geräusch- und Verschleißminimierung an Verzahnungsstellen sowohl außerhalb als innerhalb des Getriebes beitragen.

Vorteilhafte Ausführungen und Weiterbildungen der Erfindung sind den Unteransprüchen sowie der nachfolgenden Figurenbeschreibung und den beigefügten Figuren entnehmbar.

Vorteilhafte Ausführungsformen und Weiterbildungen der Erfindung sind in den Unteransprüchen angegeben.

Im Folgenden wird die Erfindung anhand der beigefügten Figuren beispielhaft beschrieben. Es zeigen:
- Fig. 1: eine Antriebseinheit mit einem Verbrennungsmotor, einem Getriebe und mit zwei Torsionsdämpfern, zwischen denen funktional eine Elektromaschine und eine Kupplung angeordnet sind;
- Fig. 2: einen Ausschnitt der in Fig. 1 gezeigten Antriebseinheit mit einer demgegenüber modifizierten Lagerungsanordnung.

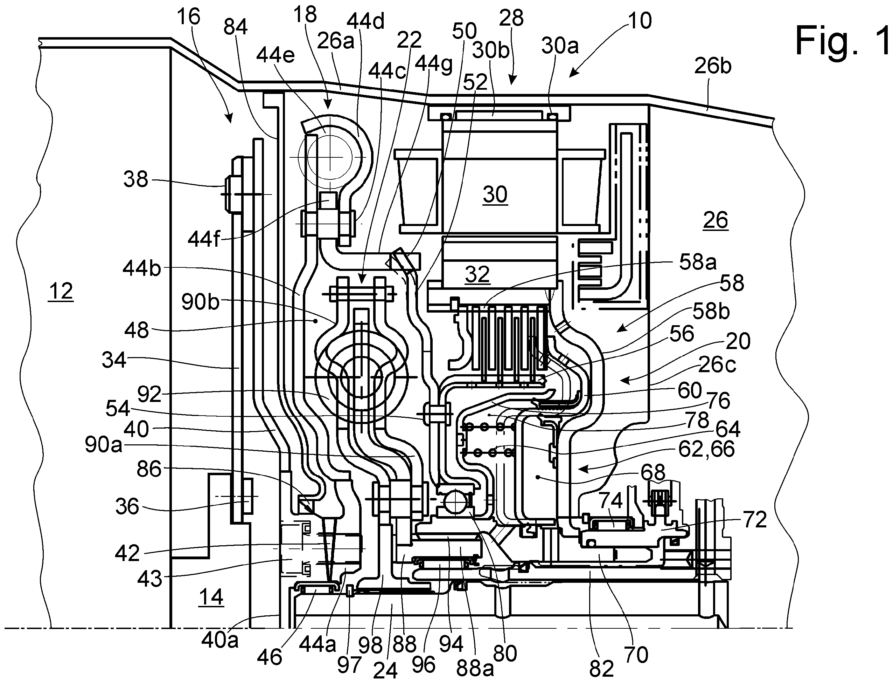

Die Fig. 1 zeigt eine Antriebseinheit 10 mit einem Verbrennungsmotor 12 als eine erste Antriebsquelle mit einer als Kurbelwelle 14 ausgebildeten Abtriebswelle, deren Drehmoment über eine Koppelanordnung 16, einen ersten Torsionsdämpfer 18, eine schaltbare Kupplung 20 und einen zweiten Torsionsdämpfer 22 über eine Eingangswelle 24 in ein Gangwechselgetriebe 26 eingeleitet werden kann, um von dort über weitere, hier zeichnerisch nicht dargestellte Antriebsstrangelemente auf die Antriebsräder eines Hybridfahrzeuges übertragen zu werden. Die Antriebseinheit 10 weist weiter eine Elektromaschine 28 mit einem Stator 30 und einem Rotor 32 als eine zweite Antriebsquelle auf, dessen Drehmoment in den zwischen dem Verbrennungsmotor 12 und dem Getriebe 26 ausgebildeten Antriebsstrangabschnitt einleitbar ist. Das Getriebe 26 ist im vorliegenden Fall als ein gestuftes vollautomatisches Getriebe ausgeführt. Üblicherweise ist einem solchen Getriebe 26 ein hydrodynamischer Drehmomentwandler vorgeschaltet, der jedoch hierbei zugunsten der vorgenannten Funktionselemente entfallen ist. Es sei hervorgehoben, dass bei der vorliegenden Antriebseinheit 10 zwischen dem Verbrennungsmotor 12 und dem Getriebe 26 lediglich eine einzige, wahlweise schaltbare Kupplung 20 vorgesehen ist, die zum Anfahren als auch zum Gangwechsel das übertragene Drehmoment ganz oder nur zu einem gewissen Betrag begrenzen kann.

Nachstehen wird die Ausgestaltung des zwischen dem Verbrennungsmotor 12 und dem Getriebe 26 befindlichen Antriebsstrangabschnitts im Detail beschrieben.

Die im Drehmomentweg auf die Kurbelwelle 14 folgende Koppelanordnung 16 umfasst zunächst eine axial flexible Drehmomentübertragungsplatte in Form einer Flexplate 34, die radial innen mittels Schraubbolzen 36 mit der Kurbelwelle 14 und radial außen wiederum über Bolzen 38 mit einer als Driveplate bezeichneten und im Wesentlichen axial steifen Übertragungsscheibe 40 verbunden ist. Durch diese Anbindung sind axiale Kurbelwellenschwingungen und eine sich ggf. beim Zusammenbau der Antriebseinheit 10 ergebende toleranzbedingte axiale Fehlpassung einfach kompensierbar. Auf diese Weise wird eine gegenseitige unerwünschte Verspannung von den im Drehmomentübertragungsweg zwischen dem Verbrennungsmotor 12 und dem Getriebe 26 befindlichen Funktionselementen sicher vermieden.

Die Driveplate 40 ist in deren radial inneren Bereich zur Schaffung eines Bewegungsspielraums axial leicht gekröpft geformt und weist ein Hohlnabe 40a auf, die mittels einer Formschlussverbindung 42 mit einer Nabe 44a des ersten Torsionsdämpfers 18 in Drehmitnahmeverbindung steht. Die Formschlussverbindung 42 ist im vorliegenden Fall als axiale Formschlussverbindung, insbesondere als Hirth-Verzahnung ausgeführt, bei der die beiden Naben 40a; 44a mittels mehrer Schraubbolzen 43 axial verspannt sind. Radial innerhalb der verbundenen Naben 40a; 44a ist ein sich zumindest abschnittweise über beide Naben 40a; 44a erstreckendes Lager 46, was hier ein Wälzlager darstellt, ausgebildet bzw. angeordnet, über welches sich die Koppelanordnung 16 und der erste Torsionsdämpfer 18 auf der Eingangswelle 24 des Automatgetriebes 26 abstützen können bzw. welches eine Lagerstelle für die Getriebeeingangswelle 24 bereitstellt.

Die der Kurbelwelle 14 abgewandte Nabe 44a bildet zugleich mit einem sich daran anschließenden und im Wesentlichen nach radial außen erstreckendem scheibenfömigen Deckblech 44b und mit einem daran mittels Nieten 44c verbundenem weiteren Deckblech 44d das Eingangsteil des ersten Torsionsdämpfers 18. Zwischen den Deckblechen 44b; 44d sind in Umfangsrichtung mehrere Kammern zur Aufnahme von Federn 44e ausgebildet, deren Enden sich jeweils einerseits an den Deckblechen 44b; 44d und andererseits an einem Ringkragen 44f eines Nabenelements 44g abstützen, das axial zwischen den Deckblechen 44b; 44d angeordnet ist und das diesen gegenüber über einen gewissen Drehwinkelbereich verdrehbar gelagert ist. In der Fig. 1 ist erkennbar, dass der Federsatz 44e des ersten Torsionsdämpfers 18 den Stator 30 der Elektromaschine 28 radial erreicht und dass, das Ausgangsteil darstellende Nabenelement 44g im radial äußeren Bereich des Torsionsdämpfers 18 axial abgewinkelt ausgeführt ist und somit einen horizontalen Rohrfortsatz ausbildet, um dadurch einen topfförmigen Aufnahmeraum 48 zur Anordnung des zweiten Torsionsdämpfers 22 auszubilden.

Das Nabenelement 44g weist an der zu dem Getriebe 26 gewandten Seite eine Formschlussverbindung 50 zur Drehmitnahme eines sich hier im Wesentlichen radial erstreckenden Mitnehmerelements 52 auf, welches einen Teil eines Eingangsteils 52 der Kupplung 20 bildet. Dazu sind an den beiden als Blechumformteil gefertigten Elementen 44g; 52 Zahnprofile vorgesehen, deren Zähne und Lücken sich wechselseitig durchdringen können. Das Zahnprofil des Mitnehmerelements 52 ist in Form relativ langer Zahnfinger und in Richtung des korrespondierenden Profil etwas abgewinkelt ausgebildet, wodurch beim Zusammenfügen eine gewisse Federwirkung resultiert, die die Wirkpartner im Wesentlichen spielfrei in gegenseitiger Anlage hält, jedoch gleichzeitig einen Axial- und einen Radialausgleich zulässt.

Die Kupplung 20 ist im vorliegenden Ausführungsbeispiel als nasslaufende Lamellenkupplung ausgeführt, wozu in einem radial inneren Abschnitt das Mitnehmerelement 52 mittels einer Nietverbindung 54 mit einem radial außen verzahnten Innenlamellenträger 56 fest verbunden ist, auf dem eine Mehrzahl dort axial verlagerbarer Innenlamellen angeordnet sind, welche in die Zwischenräume von mehreren, auf einem dazu radial beabstandeten und ebenfalls verzahnten Außenlamellenträger 58 axial verlagerbaren Außenlamellen eingreifen und zu diesen in eine Reibschlussverbindung gebracht werden können.

Das gesamte aus den Lamellen gebildete Paket kann mittels eines druckbeaufschlagbaren hydraulischen Kolbens 60 einer Betätigungseinrichtung 62 entgegen der Wirkung einer hier als Schraubendruckfeder ausgebildeten Rückstellelementes 64 belastet werden, wodurch die Drehmomentübertragung zwischen dem Außen- 58 und dem Innenlamellenträger 56 und den nachfolgenden Elementen gesteuert wird. Bevorzugt werden bei der Lamellenkupplung die Innenlamellen als Reiblamellen ausgeführt wie dieses in der Fig. 1 erkennbar ist. Der Kolben 60 bildet dabei eine Begrenzung eines innerhalb eines Druckmittelzylinders 66 ausgebildeten Druckraums 68. Dieser Druckraum 68 wird weiterhin durch einen radial verlaufenden Abschnitt des Außenlamellenträgers 58 und durch eine fest mit diesem verbundene hohl ausgeführte Kupplungsnabe 70 begrenzt. Die Kupplungsnabe 70 stellt eine Zwischenwelle dar, die wiederum fest mit einer Pumpennabe 72 verbunden ist, welche sich über die Getriebeglocke 26a bzw. das Getriebegehäuse 26b mittels eines Lagers 74 abgestützt. Die Pumpennabe 72 ist Bestandteil einer an dem Getriebe 26 angeordnete Pumpe, mittels der ein Fluiddruck aufgebaut werden kann und im Ergebnis ein Ölaustausch zwischen der Kupplung 20 und dem Getriebe 26 ermöglicht wird.

Zwischen dem Kolben 60 einerseits und dem Außenlamellenträger 58 und der Kupplungsnabe 70 andererseits sind jeweils Dichtelemente vorgesehen. Zu dem Druckmittelzylinder 66 gehört weiterhin ein verbrennungsmotorseitig axial zum Kolben 60 beabstandeter Wandungsbereich 76, der gemeinsam mit dem Kolben 60 und einem Abschnitt der Kupplungsnabe eine Fliehkraft-Druckausgleichskammer 78 begrenzt, der radial außen mittels eines mit dem Kolben 60 zusammenwirkenden Dichtelementes abgedichtet ist.

Mit einem noch weiteren Abschnitt ist die Kupplungsnabe 70 als Lagerstelle zur Lagerung des Kupplungseingangselementes, hier insbesondere des Innenlamellenträgers 56, ausgebildet bzw. zur Aufnahme eines Lagers vorgesehen, wobei im vorliegenden Fall in dem genannten Abschnitt ein Wälzlager 80 angeordnet ist. Gemäß einer Abwandlung kann auch vorgesehen sein, dass das Eingangsteil der Kupplung 20 fest mit der Kupplungsnabe 70 verbunden ist, während das Ausgangsteil drehbar auf der Nabe 70 gelagert ist.

In der Fig. 1 ist weiter zu sehen, dass die Getriebeeingangswelle 24 hohl ausgeführt ist und dass sich radial zwischen dieser und der Kupplungsnabe 70 eine getriebefest angeordnete, rohrförmige Stütznabe 82 in Richtung des Verbrennungsmotors 12 erstreckt, die gemeinsam mit der Kupplungsnabe 70 auf etwa derselben Axiallage endet.

Innerhalb als auch zwischen der Getriebeeingangswelle 24, der Stütznabe 82 und der Zwischenwelle bzw. Kupplungsnabe 70 sind durch radiale Zwischenräume und Radialöffnungen Fluidkanäle ausgebildet, die zur Betätigung der Kupplung 20 eine Fluidverbindung zwischen einem im Getriebe 26 vorgesehenen Fluidkreislauf einerseits und dem Betätigungskolben 60 der Kupplung 20 und der Fliehkraft-Druckausgleichskammer 78 andererseits schaffen.

Der Wandungsbereich der Fliehkraft-Druckausgleichskammer 78 ist radial innen, in der Nähe der Lagerstelle 80 durchbrochen, so dass Fluid von dort nach radial außen an die Innenseite des Innenlamellenträgers 56 transportiert werden kann, wo es durch dort vorgesehene Öffnungen zur Kühlung in die Lamellenzwischenräume eintreten und von dort beispielsweise über Öffnungen im Außenlamellenträger 58 noch weiter nach radial außen befördert werden kann.

Es ist somit bezüglich der Kupplung 20 erkennbar, dass diese als "Normally-Open-Typ" zur gedrückten Betätigung ausgeführt ist. Es ist auch gemäß einer Abwandlung des dargestellten Ausführungsbeispiels möglich, das Eingangsteil der Kupplung 20 als Außenlamellenträger auszuführen.

Die Ansteuerung der Kupplungen 20 wird von einem zeichnerisch nicht dargestellten Getriebesteuergerät übernommen. Die Abtrennung des durch die Nasskupplung 20 geschaffenen Nassraumes erfolgt einerseits durch das Getriebegehäuse 26b, genauer durch eine das Getriebe 26 begrenzende Stirnwand 26c und durch die Getriebeglocke 26a. Zusätzlich kann zur axialen Bauraumverlängerung bei Bedarf ein Zwischengehäuse eingefügt werden. Zum Weiteren ist axial zwischen der Driveplate 40 und dem Eingangsteil 44b des ersten Torsionsdämpfers 18 eine Zwischenwand 84 angeordnet, welche radial außen an der Getriebeglocke 26a befestigt ist und die radial innen mittels eines dort eingesetzten Wellendichtringes 86 mit der Nabe 40a der Driveplate 40 in Dichtkontakt steht. Die Koppelanordnung 16, bestehend aus Flex- und Driveplate 34; 40 befindet sich somit in einem gegenüber dem Nassraum abgegrenzten Trockenraum.

In dem bisher beschriebenen, vom Verbrennungsmotor 12 beginnenden Drehmomentübertragungsgweg folgt der Kupplung 20 der zweite Torsionsdämpfer 22, der innerhalb des Aufnahmeraums 48 des ersten Torsionsdämpfers 18 angeordnet ist. Der zweite Torsionsdämpfer 22 umfasst ein als Nabenelement 88 gestaltetes Eingangsteil, welches axial zwischen zwei miteinander fest verbundenen, das Ausgangsteil bildende Deckblechen 90a, b angeordnet ist und entgegen der Wirkung eines wiederum in Kammern zwischen diesen Teilen eingespannten Federsatzes 92 relativ um einen bestimmten Betrag zueinander verdrehbar sind. Die Einleitung eines von der Kupplung 20 übertragenen Drehmoments erfolgt über eine als Steckverzahnung ausgebildete Formschlussverbindung 94 zwischen der Kupplungsnabe 70 und einen in diese axial eingeführten Rohrfortsatz 88a des Nabenelements 88.

Es ist in der Fig. 1 ersichtlich, dass sich der zweite Torsionsdämpfer 22 mit dessen Rohrfortsatz 88a über ein weiteres Lager 96, welches hier ein Wälzlager darstellt, auf der getriebefesten Stütznabe 82 abstützt. Zur Ausbildung einer weiteren Lagerstelle und zum Zweck der Drehmomentübertragung ist am radial inneren Bereich des zum Verbrennungsmotor 12 weisenden Deckblechs 90b eine innenverzahnte Nabe 98 vorgesehen, welche auf die in diesem Abschnitt außenverzahnte Eingangswelle 24 des Getriebes 26 aufgeschoben und mittels eines Sicherungsringes 97 axial gesichert ist, wobei die Getriebeeingangswelle 24 selbst mittels des Lagers 46 abgestützt ist. Zusätzlich ist zwischen dem Eingangsteil, d.h. dem Nabenelement 88 und dem Ausgangsteil, insbesondere der Nabe 98 ein Axiallager eingefügt. Zur Erzeugung einer axialen Vorspannung des zweiten Torsionsdämpfers 22 in Richtung der Kupplung 20 wirkt zwischen dem Sicherungsring 97 und der Nabe 98 eine Tellerfeder 99.

Um das Fahrzeug bei Bedarf neben einer reinen verbrennungsmotorischen Betriebsweise alternativ auch rein elektromotorisch oder in einer gemischten Betriebsweise antreiben zu können, weist die Antriebseinheit 10 wie bereits erwähnt eine Elektromaschine 28 auf, die vorliegend als permanenterregte Synchronmaschine in Innenläuferbauart ausgeführt ist. Der Stator 30 ist über einen Statorträger 30a mittels einer hier nicht gezeigten Verschraubung innerhalb der Getriebeglocke 26a drehfest abgestützt angeordnet. Hinsichtlich deren elektromagnetischen Wirkungsweise ist die spezielle Bauart der Elektromaschine 28 für die weiteren Ausführungen unerheblich, d.h. diese kann auch als Asynchronmaschine; Reluktanzmaschine oder dgl. vorgesehen sein.

Je nach der vorgesehenen aktiven Länge der Elektromaschine 28 kann zu deren Aufnahme bei Notwendigkeit auch ein den axialen und/oder radialen Bauraum erweiterndes Zwischengehäuse vorgesehen sein.

Der innerhalb des Stators 30 drehbar gelagerte Rotor 32 ist drehfest mit dem Außenlamellenträger 58 der Kupplung 20 verbunden und weist ein lamelliertes Rotorjoch auf, an dessen Außenumfangsfläche eine Mehrzahl von Permanentmagneten angeordnet ist, deren Magnetfeld mit einem von einem Wicklungssystem des Stators 30 erzeugten weiteren Magnetfeld wechselwirken und somit den Rotor 32 antreiben kann und zum Antrieb des Fahrzeuges oder dem Starten des Verbrennungsmotors 12 dienen kann. Insofern stellt der Außenlamellenträger 58 gleichzeitig einen Rotorträger dar. Der Außenlamellenträger bzw. der Rotorträger 58 ist in der Fig. 1 mit einem axialen Abschnitt 58a und einem radialen Abschnitt 58b zunächst zweiteilig ausgeführt, wobei die beiden Teile 58a, b mittels einer Fügeverbindung, z.B. einer Schweißnaht miteinander verbunden werden. Alternativ kann dieser auch einteilig, z.B. als Blechumformteil geformt sein. Die Kupplung 20 befindet sich damit einschließlich des zugehörigen Betätigungsorgans 66 radial und axial innerhalb des von der Elektromaschine 28, insbesondere des vom Rotor 32 umschlossenen Aufnahmeraums. Die Elektromaschine 28 befindet sich damit ebenfalls innerhalb des zuvor beschrieben Nassraums und kann damit gleichzeitig von dem sich dort unter einer Fliehkraftwirkung ausbreitenden Fluid-Luft-Gemisches gekühlt werden. Des Weiteren ist innerhalb des Statorträgers 30a ein umlaufender Kühlkanal 30b vorgesehen, indem ein Kühlfluid, beispielsweise über eine Strömungsverbindung zu einem Getriebeölkreislauf, zirkulieren und dabei ggf. auch die Statorspulenköpfe mit dem Fluid benetzten kann. Alternativ kann der Rotor 32 gemäß einer modifizierten Bauweise auch mit dem Eingangsteil der Kupplung 56 verbunden sein.

Durch die Implementierung der beschriebenen Antriebseinheit 10 wird ein vielseitiger Hybridantrieb dargestellt, welcher bei Abkopplung des Verbrennungsmotors 12 durch Öffnen der Kupplung 20 einen alleinigen elektromotorischen Fahrbetrieb ermöglicht. Die elektrische Maschine 28 kann im Motorbetrieb die Pumpenanordnung des Automatikgetriebes 26 direkt antreiben und ermöglicht somit auch während des rein elektrischen Fahrbetriebes sämtliche hydraulischen Getriebefunktionen.

Die elektrische Maschine 28 kann bei geschlossener Kupplung einen Schwungstart zum Starten des Verbrennungsmotors 12 ausführen. Die Antriebseinheit 10 ist so konzipiert, dass zwischen der Kurbelwelle 14 und dem Rotor 32 ein möglichst geringes Trägheitsmoment auftritt, um dadurch einen möglichst schnellen Motorstart zu ermöglichen.

Das Schließen der Kupplung 20 bei rotierendem Rotor 32, d.h. das Hinzuschalten des stehenden Verbrennungsmotors 12 kann in der Weise erfolgen, dass das Antriebsmoment der Elektromaschine 28 in dem Maße erhöht wird, wie der Startvorgang des Verbrennungsmotors 12 es erfordert. Das Antriebsmoment auf die Räder bleibt hierbei unbeeinflusst, somit bleibt den Fahrzeuginsassen dieser Vorgang weitestgehend verborgen.

Es ist jedoch für einen Direktstart auch möglich, den stehenden Verbrennungsmotor 12 mittels der geschlossenen Kupplung 20 drehfest an den Rotor 32 der elektrischen Maschine zu koppeln und beide Aggregate im Verein aus dem Stand hochzudrehen.

Der Fahrbetrieb mit Verbrennungsmotor 12 erfolgt mit geschlossener Kupplung 20. Die elektrische Maschine 28 läuft hierbei im Generatorbetrieb mit. Während des Fahrbetriebes kann der Generatorbetrieb im Bedarfsfall jedoch für eine bestimmte Zeit unterbrochen werden, damit die elektrische Maschine 28 im Motorbetrieb den Verbrennungsmotor 12 unterstützen kann und somit ein zusätzliches Drehmoment in den Fahrzeugantriebsstrang einleiten kann.

Bei Fahrzeugstillstand ist die elektrische Maschine 28 bei geöffneter Kupplung 20 in der Lage, mittels geringer Antriebsdrehzahlen den Fluiddruck im Getriebe 26 aufrechtzuerhalten.

Bei der Montage der Antriebseinheit 10 werden zunächst die Elektromaschine 28 und die Kupplung 20 einschließlich deren Betätigungseinrichtung 66 in die Getriebeglocke 26a eingesetzt, wobei der Stator 30 mit dieser oder mit einem Zwischengehäuse verschraubt wird und der Rotor 32 gemeinsam mit der Kupplung 20 mittels der Kupplungsnabe 70 in die Pumpennabe 72 eingeführt wird. Danach können der zweite und der erste Torsionsdämpfer 22; 18 auf die Getriebeeingangswelle 24 bzw. die Kupplungsnabe 70 aufgesteckt werden, wobei das Ausgangsteil 44g des ersten Torsionsdämpfers 18 mit dem Mitnehmerelement 52 der Kupplung 20 in Eingriff gelangt. Anschließend kann die den Nass- vom Trockenraum abtrennende Zwischenwand 84 an der Getriebeglocke 26a festgelegt und die Driveplate 40 mit dem Eingangsteil 44a des ersten Torsionsdämpfers 18 verschraubt werden. Beim Zusammenfügen von Verbrennungsmotor 12 und Getriebe 26 gelangen dann die von der Driveplate 40 axial abstehenden Bolzen 38 mit entsprechenden Öffnungen der bereits vorab mit der Kurbelwelle 14 verbunden Flexplate 34 in Eingriff.

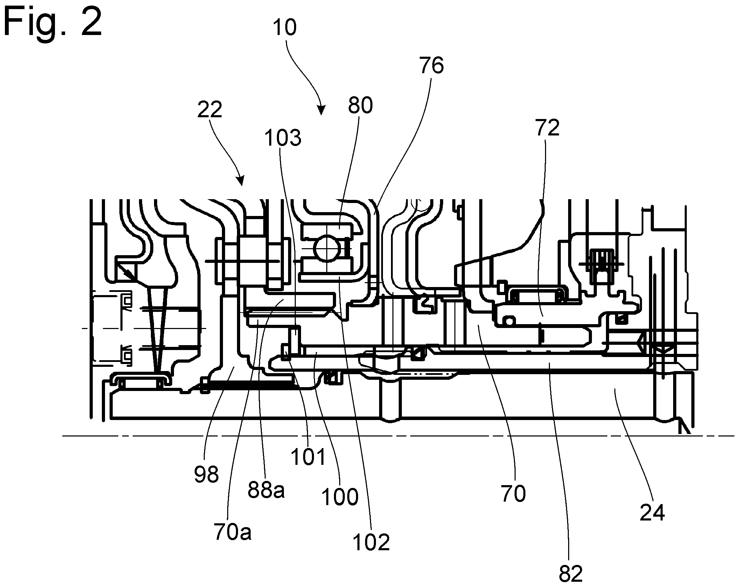

In Fig. 2 ist ein Ausschnitt der mit Fig. 1 gezeigten und vorstehend beschriebenen Antriebseinheit gezeigt, wobei lediglich das Lagerungskonzept der Kupplung 20 und des zweiten Torsionsdämpfers 22 wie nachfolgend erläutert, modifiziert wurde. Die zu Fig. 1 eingeführten Bezugszeichen wurden beibehalten.

Im direkten Vergleich zu Fig. 1 ist bei der Antriebseinheit 10 in der Fig. 2 die die Zwischenwelle darstellende Kupplungsnabe 70 an deren verbrennungsmotorseitigem Endabschnitt 70a hier mit einer Außenverzahnung ausgeführt, welche mit einem innenverzahnten Rohrfortsatz 88a des Torsionsdämpfers 22 in Eingriff steht. Die Kupplungsnabe 70 erfährt neben der Lagerung innerhalb der Pumpennabe 72 eine weitere, axial davon beabstandete Lagerung mittels eines zwischen der Kupplungsnabe 70 und der Stütznabe 82 angeordneten Lagers 100, welches als Gleitlager ausgebildet ist. Dieses ist mittels eines Sicherungsringes 101 und einer mit der Kupplungsnabe 70 zusammenwirkenden Anlaufscheibe 103 gesichert.

Das Lager 80 ist in Abweichung von Fig 1 nicht unmittelbar, sondern lediglich mittelbar mit der Kupplungsnabe 70 verbunden. Zur Aufnahme des Lagers 80 ist gemäß Fig. 2 ein am Wandungsbereich 76 der Fliehkraft-Druckausgleichskammer rohrförmiges Tragelement 102 festgelegt.

Zusammengefasst bietet die erläuterte Antriebseinheit 10 eine umfangreiche Funktionalität bei sehr geringem Platzbedarf. Die Antriebseinheit 10 kann bezüglich der von Verbrennungsmotor und einem Automatgetriebe gebildeten Einheit durch den Entfall des Drehmomentwandlers nahezu bauraumneutral zwischen dem Verbrennungsmotor und dem Getriebe angeordnet werden. Durch den Einsatz einer nasslaufenden Kupplung gemäß der Beschreibung ist eine hohe Anfahrleistung möglich. Zudem wird mit einer innenlaufenden elektrischen Maschine ein gewünschtes geringes Massenträgheitsmoment realisiert. Gemäß einem weiteren Aspekt ist die vorgeschlagene Antriebseinheit als ein Baukastensystem zu betrachten, bei dem insbesondere die Torsionsdämpfer, die aktive Länge der Elektromaschine und das Übertragungsmoment der Kupplung durch Anpassung der Lamellenanzahl variiert werden können.

So kann beispielsweise auf der Grundlage der mit den Fig. 1, 2 erläuterten Antriebseinheit gemäß einer weiteren, hier zeichnerisch nicht dargestellten Variante mit einer gegenüber Fig. 1 verlängerten Elektromaschine zumindest der zweite Torsionsdämpfer, gegebenfalls auch der erste Torsionsdämpfer, radial und vollständig oder zumindest teilweise auch axial innerhalb des von der Elektromaschine gebildeten Aufnahmeraums angeordnet werden. Es ist unabhängig davon auch möglich, den ersten und/oder den zweiten Torsionsdämpfer in einer gegenüber Fig. 1 abgewandelten Form auszubilden. Dazu kann beispielsweise der zweite Torsionsdämpfer mittels zwei funktional parallel arbeitender Einzeldämpfern ausgeführt sein, deren Naben mit der Zwischenwelle in Drehmitnahme stehen und deren Ausgangselemente miteinander verbunden sind und über ein gemeinsames Nabenelement mit der Getriebeeingangswelle zusammenwirken.

### Bezugszeichenliste

- 10: Antriebseinheit
- 12: Verbrennungsmotor
- 14: Kurbelwelle
- 16: Koppelanordnung
- 18: erster Torsionsdämpfer
- 20: Kupplung
- 22: zweiter Torsionsdämpfer
- 24: Eingangswelle
- 26: Getriebe
- 26a: Getriebeglocke
- 26b: Getriebegehäuse
- 26c: Stirnwand
- 28: Elektromaschine
- 30: Stator
- 32: Rotor
- 34: Flexplate
- 36, 38: Bolzen
- 40: Driveplate
- 40a: Hohlnabe
- 42: Formschlussverbindung
- 43: Bolzen
- 44a: Nabe
- 44b, d: Deckblech
- 44c: Niet
- 44e: Feder, Federsatz
- 44f: Ringkragen
- 44g: Nabenelement
- 46: Lager
- 48: Aufnahmeraum
- 50: Formschlussverbindung
- 52: Mitnehmerelement
- 54: Nietverbindung
- 56: Innenlamellenträger
- 58: Außenlamellenträger
- 60: Kolben
- 62: Betätigungseinrichtung
- 64: Rückstellelement
- 66: Druckmittelzylinder
- 68: Druckraum
- 70: Kupplungsnabe, Zwischenwelle
- 70a: Endabschnitt
- 72: Pumpennabe
- 74: Lager
- 76: Wandungsbereich
- 78: Fliehkraft-Druckausgleichskammer
- 80: Lager
- 82: Stütznabe
- 84: Zwischenwand
- 86: Wellendichtring
- 88: Nabenelement
- 88a: Rohrfortsatz
- 90a, b: Deckblech
- 92: Federsatz
- 94: Formschlussverbindung
- 96: Lager
- 97: Sicherungsring
- 98: Nabe
- 99: Tellerfeder
- 100: Lager
- 101: Sicherungsring
- 102: Tragelement
- 103: Anlaufscheibe

## Patentansprüche

1. Antriebseinheit (10) für ein Hybridfahrzeug umfassend
- einen Verbrennungsmotor (12) mit einer Abtriebswelle (14),
- ein Getriebe (26) mit einer Eingangswelle (24),
- eine zwischen dem Verbrennungsmotor (12) und dem Getriebe (26) angeordnete elektrische Maschine (28) mit einem Stator (30) und mit einem Rotor (32), der zumindest mittelbar mit der Abtriebswelle (14) des Verbrennungsmotors (12) und mit der Getriebeeingangswelle (24) zur Übertragung eines Drehmoments koppelbar ist, wobei
- die Antriebseinheit (10) einen ersten Torsionsdämpfer (18) mit einem Eingangs- (44b, d) und einem Ausgangsteil (44f, g) und einen zweiten Torsionsdämpfer (22) mit einem Eingangs- (88) und einem Ausgangsteil (90b, 98) aufweist, wobei zumindest der Rotor (32) der elektrischen Maschine (28) innerhalb eines zwischen den Torsionsdämpfern (18; 22) ausgebildeten Drehmomentübertragungswegs angeordnet ist,
**dadurch gekennzeichnet,**
**dass** der erste und der zweite Torsionsdämpfer (18; 22) bezüglich der elektrischen Maschine (28) auf einer gemeinsamen Axialseite angeordnet sind.

2. Antriebseinheit nach Anspruch 1,
**dadurch gekennzeichnet,**
**dass** der erste und der zweite Torsionsdämpfer (18; 22) radial gestaffelt zueinander angeordnet sind und sich gegenseitig zumindest teilweise axial überdecken.

3. Antriebseinheit nach einem der vorherigen Ansprüche,
**dadurch gekennzeichnet,**
**dass** der zweite, im Drehmomentübertragungsweg getriebeseitig angeordnete Torsionsdämpfer (22) radial innerhalb des ersten, im Drehmomentübertragungsweg verbrennungsmotorseitig angeordneten Torsionsdämpfers (18) angeordnet ist.

4. Antriebseinheit nach einem der vorherigen Ansprüche, wobei im Drehmomentübertragungsweg zwischen dem Verbrennungsmotor (12) und dem Getriebe (26) eine Kupplung (20) angeordnet ist,
**dadurch gekennzeichnet,**
**dass** das Ausgangsteil (44g) des ersten Torsionsdämpfers (18) mittels einer Formschlussverbindung (50) mit einem Eingangsteil (52) der Kupplung (20) in Drehmitnahmeverbindung steht.

5. Antriebseinheit nach einem der vorherigen Ansprüche,
**dadurch gekennzeichnet,**
**dass** die Kupplung (20) zumindest teilweise innerhalb eines von der elektrischen Maschine (28) gebildeten Aufnahmeraums angeordnet ist.

6. Antriebseinheit nach einem der vorherigen Ansprüche,
**dadurch gekennzeichnet,**
**dass** der Rotor (32) der elektrischen Maschine (28) einen Rotorträger (58) umfasst, der in Baueinheit mit dem Eingangs- oder einem Ausgangsteil der Kupplung (20) ausgeführt ist.

7. Antriebseinheit nach einem der vorherigen Ansprüche,
**dadurch gekennzeichnet,**
**dass** der Rotorträger (58) drehfest mit einer koaxial um die Getriebeeingangswelle (24) angeordneten und am Getriebe (26) gelagerten Zwischenwelle (70) verbunden ist.

8. Antriebseinheit nach einem der vorherigen Ansprüche,
**dadurch gekennzeichnet,**
**dass** das Eingangs- (56) oder das Ausgangsteil (58) der Kupplung (20) zumindest mittelbar auf der Zwischenwelle (70) drehbar gelagert ist, während das jeweils andere von Eingangsteil (56) und Ausgangsteil (58) drehfest mit der Zwischenwelle (70) verbunden ist.

9. Antriebseinheit nach einem der vorherigen Ansprüche,
**dadurch gekennzeichnet,**
**dass** der zweite Torsionsdämpfer (22) mit dessen Eingangsteil (88) auf einer getriebeseitig angeordneten und radial zwischen der Zwischenwelle (70) und der Getriebeeingangswelle (24) angeordneten Stütznabe (82) gelagert ist und dass das Ausgangsteil (90b; 98) dieses Torsionsdämpfers (22) drehfest mit der Getriebeeingangswelle (24) gekoppelt ist.

10. Antriebseinheit nach einem der vorherigen Ansprüche,
**dadurch gekennzeichnet,**
**dass** die Kupplung (20) als Lamellenkupplung ausgebildet ist.

11. Antriebseinheit nach einem der vorherigen Ansprüche,
**dadurch gekennzeichnet,**
**dass** die Kupplung (20) als "Normally-Open-Kupplung" zur gedrückten Betätigung ausgeführt ist.

12. Antriebseinheit nach einem der vorherigen Ansprüche,
**dadurch gekennzeichnet,**
**dass** die Getriebeeingangswelle (24), die Stütznabe (82) und die Zwischenwelle (70) Fluidkanäle aufweisen, die eine Fluidverbindung zwischen einem im Getriebe (26) vorgesehenen Fluidkreislauf einerseits und einem Fluiddruckraum (68) der Kupplung (20) und einer Fliehkraft-Druckausgleichskammer (78) andererseits ausbilden.

13. Antriebseinheit nach einem der vorherigen Ansprüche,
**dadurch gekennzeichnet,**
**dass** die Torsionsdämpfer (18; 22), die elektrische Maschine (28) und die Kupplung (20) innerhalb eines Nassraums angeordnet sind, der durch ein Getriebegehäuse (26b, c) und durch eine verbrennungsmotorseitig an diesem angeordnete Zwischenwand (84) begrenzt ist.

14. Antriebseinheit nach einem der vorherigen Ansprüche,
**dadurch gekennzeichnet,**
**dass** die Kupplungsnabe (70) unmittelbar auf der Getriebeeingangswelle (24) gelagert ist.

15. Antriebseinheit nach einem der vorherigen Ansprüche,
**dadurch gekennzeichnet,**
**dass** zumindest ein Torsionsdämpfer (18, 22) radial und zumindest teilweise axial innerhalb des von der Elektromaschine (28) gebildeten Aufnahmeraums angeordnet ist.

## Claims

1. Drive unit (10) for a hybrid vehicle, comprising:
- an internal combustion engine (12) having an output shaft (14);
- a gearbox (26) having an input shaft (24);
- an electric machine (28), disposed between the internal combustion engine (12) and the gearbox (26), which has a stator (30) and a rotor (32) which for transmitting a torque is able to be coupled at least indirectly to the output shaft (14) of the internal combustion engine (12) and to the gearbox input shaft (24), wherein
- the drive unit (10) has a first torsional vibration absorber (18) having an input part (44b, d) and an output part (44f, g), and a second torsional vibration absorber (22) having an input part (88) and an output part (90b, 98), wherein at least the rotor (32) of the electric machine (28) is disposed within a torque-transmission path configured between the torsional vibration absorbers (18; 22),
**characterized in that**
the first and the second torsional vibration absorber (18; 22) in terms of the electric machine (28) are disposed on a common axial side.

2. Drive unit according to Claim 1,
**characterized in that**
the first and the second torsional vibration absorber (18; 22) are disposed so as to be mutually staggered in a radial manner and overlap at least in part in an axial manner.

3. Drive unit according to one of the preceding claims,
**characterized in that**
the second torsional vibration absorber (22) disposed so as to be proximal to the gearbox in the torque transmission path is disposed within the torsional vibration absorber (18) disposed so as to be proximal to the internal combustion engine in the torque transmission path.

4. Drive unit according to one of the preceding claims, wherein a clutch (20) is disposed between the internal combustion engine (12) and the gearbox (26) in the torque transmission path,
**characterized in that**
the output part (44g) of the first torsional vibration absorber (18) by means of a form-fitting connection (50) is connected in a torque-entraining manner to an input part (52) of the clutch (20).

5. Drive unit according to one of the preceding claims,
**characterized in that**
the clutch (20) is at least in part disposed within a receptacle space formed by the electric machine (28) .

6. Drive unit according to one of the preceding claims,
**characterized in that**
the rotor (32) of the electric machine (28) comprises a rotor carrier (58) which in terms of construction is embodied so as to be integral to the input part or an output part of the clutch (20).

7. Drive unit according to one of the preceding claims,
**characterized in that**
the rotor carrier (58) is connected in a rotationally fixed manner to a layshaft (70) which is disposed so as to be coaxial about the gearbox input shaft (24) and mounted on the gearbox (26).

8. Drive unit according to one of the preceding claims,
**characterized in that**
the input part (56) or the output part (58) of the clutch (20) is at least indirectly rotatably mounted on the layshaft (70), while the respective other of input part (56) and output part (58) is connected in a rotationally fixed manner to the layshaft (70).

9. Drive unit according to one of the preceding claims,
**characterized in that**
the second torsional vibration absorber (22) by way of the input part (88) thereof is mounted on a supporting hub (82) which is disposed so as to be proximal to the gearbox and disposed so as to be radially between the layshaft (70) and the gearbox input shaft (24), and **in that** the output part (90b; 98) of this torsional vibration absorber (22) is coupled in a rotationally fixed manner to the gearbox input shaft (24).

10. Drive unit according to one of the preceding claims,
**characterized in that**
the clutch (20) is configured as a multi-plate clutch.

11. Drive unit according to one of the preceding claims,
**characterized in that**
the clutch (20) is embodied as a normally open clutch for push-activation.

12. Drive unit according to one of the preceding claims,
**characterized in that**
the gearbox input shaft (24), the supporting hub (82), and the layshaft (70) have fluid ducts which configure a fluidic connection between a fluid circuit provided in the gearbox (26), on the one hand, and a pressurized fluid chamber (68) of the clutch (20) and a centrifugal-force pressure equalization chamber (78), on the other hand.

13. Drive unit according to one of the preceding claims,
**characterized in that**
the torsional vibration absorbers (18; 22), the electric machine (28), and the clutch (20) are disposed within a wet chamber which is delimited by a gearbox housing (26b, c) and by an intermediate wall (84) which on said gearbox housing (26b, c) is disposed so as to be proximal to the internal combustion engine.

14. Drive unit according to one of the preceding claims,
**characterized in that**
the clutch hub (70) is mounted directly on the gearbox input shaft (24).

15. Drive unit according to one of the preceding claims,
**characterized in that**
at least one torsional vibration absorber (18, 22) in a radial manner, and at least in part in an axial manner, is disposed within the receptacle space formed by the electric machine (28).

## Revendications

1. Unité d'entraînement (10) pour un véhicule hybride, comprenant :
- un moteur à combustion interne (12) avec un arbre de prise de force (14),
- une boîte de vitesses (26) avec un arbre d'entrée (24),
- une machine électrique (28) disposée entre le moteur à combustion interne (12) et la boîte de vitesses (26), comprenant un stator (30) et un rotor (32) qui peut être accouplé de manière au moins indirecte à l'arbre de prise de force (14) du moteur à combustion interne (12) et à l'arbre d'entrée de boîte de vitesses (24) pour transmettre un couple,
- l'unité d'entraînement (10) présentant un premier amortisseur de torsion (18) avec une partie d'entrée (44b, d) et une partie de sortie (44f, g) et un deuxième amortisseur de torsion (22) avec une partie d'entrée (88) et une partie de sortie (90b, 98), au moins le rotor (32) de la machine électrique (28) étant disposé à l'intérieur d'une voie de transfert de couple réalisée entre les amortisseurs de torsion (18 ; 22),
**caractérisée en ce que**
le premier et le deuxième amortisseur de torsion (18 ; 22) sont disposés sur un côté axial commun par rapport à la machine électrique (28).

2. Unité d'entraînement selon la revendication 1,
**caractérisée en ce que**
le premier et le deuxième amortisseur de torsion (18 ; 22) sont disposés de manière échelonnée radialement l'un par rapport à l'autre et se recouvrent axialement mutuellement au moins en partie.

3. Unité d'entraînement selon l'une quelconque des revendications précédentes,
**caractérisée en ce que**
le deuxième amortisseur de torsion (22) disposé dans la voie de transfert de couple du côté de la boîte de vitesses est disposé radialement à l'intérieur du premier amortisseur de torsion (18) disposé dans la voie de transfert de couple du côté du moteur à combustion interne.

4. Unité d'entraînement selon l'une quelconque des revendications précédentes, dans laquelle un embrayage (20) est disposé dans la voie de transfert de couple entre le moteur à combustion interne (12) et la boîte de vitesses (26),
**caractérisée en ce que**
la partie de sortie (44g) du premier amortisseur de torsion (18) est en liaison d'entraînement en rotation au moyen d'une liaison par engagement par correspondance de formes (50) avec une partie d'entrée (52) de l'embrayage (20).

5. Unité d'entraînement selon l'une quelconque des revendications précédentes,
**caractérisée en ce que**
l'embrayage (20) est disposé au moins en partie à l'intérieur d'un espace de réception formé par la machine électrique (28).

6. Unité d'entraînement selon l'une quelconque des revendications précédentes,
**caractérisée en ce que**
le rotor (32) de la machine électrique (28) comprend un support de rotor (58) qui est réalisé dans une unité structurelle comprenant la partie d'entrée ou une partie de sortie de l'embrayage (20) .

7. Unité d'entraînement selon l'une quelconque des revendications précédentes,
**caractérisée en ce que**
le support de rotor (58) est connecté de manière solidaire en rotation à un arbre intermédiaire (70) disposé coaxialement autour de l'arbre d'entrée de boîte de vitesses (24) et supporté au niveau de la boîte de vitesses (26).

8. Unité d'entraînement selon l'une quelconque des revendications précédentes,
**caractérisée en ce que**
la partie d'entrée (56) ou la partie de sortie (58) de l'embrayage (20) est supportée de manière rotative au moins indirectement sur l'arbre intermédiaire (70) tandis que l'autre parmi la partie d'entrée (56) et la partie de sortie (58) est respectivement connectée de manière solidaire en rotation à l'arbre intermédiaire (70).

9. Unité d'entraînement selon l'une quelconque des revendications précédentes,
**caractérisée en ce que**
le deuxième amortisseur de torsion (22) est supporté avec sa partie d'entrée (88) sur un moyeu de support (82) disposé du côté de la boîte de vitesses et disposé radialement entre l'arbre intermédiaire (70) et l'arbre d'entrée de boîte de vitesses (24) et **en ce que** la partie de sortie (90b ; 98) de cet amortisseur de torsion (22) est accouplée de manière solidaire en rotation à l'arbre d'entrée de boîte de vitesses (24).

10. Unité d'entraînement selon l'une quelconque des revendications précédentes,
**caractérisée en ce que**
l'embrayage (20) est réalisé sous forme d'embrayage à disques.

11. Unité d'entraînement selon l'une quelconque des revendications précédentes,
**caractérisée en ce que**
l'embrayage (20) est réalisé sous forme d'embrayage normalement ouvert pour un actionnement par pression.

12. Unité d'entraînement selon l'une quelconque des revendications précédentes,
**caractérisée en ce que**
l'arbre d'entrée de boîte de vitesses (24), le moyeu de support (82) et l'arbre intermédiaire (70) présentent des conduits de fluide qui constituent une liaison fluidique entre un circuit de fluide prévu dans la boîte de vitesses (26) d'une part et un espace de pression de fluide (68) de l'embrayage (20) et une chambre d'équilibrage de pression à force centrifuge (78) d'autre part.

13. Unité d'entraînement selon l'une quelconque des revendications précédentes,
**caractérisée en ce que**
les amortisseurs de torsion (18 ; 22), la machine électrique (28) et l'embrayage (20) sont disposés à l'intérieur d'un espace humide qui est limité par un carter de boîte de vitesses (26b, c) et par une paroi intermédiaire (84) disposée au niveau de celui-ci du côté du moteur à combustion interne.

14. Unité d'entraînement selon l'une quelconque des revendications précédentes,
**caractérisée en ce que**
le moyeu d'embrayage (70) est supporté directement sur l'arbre d'entrée de boîte de vitesses (24).

15. Unité d'entraînement selon l'une quelconque des revendications précédentes,
**caractérisée en ce**
**qu'**au moins un amortisseur de torsion (18, 22) est disposé radialement et au moins en partie axialement à l'intérieur de l'espace de réception formé par la machine électrique (28).
